**Europäisches Patentamt**

**European Patent Office**

**Office européen des brevets**

(19)

(11) Veröffentlichungsnummer : **0 418 264 B1**

(12) ## EUROPÄISCHE PATENTSCHRIFT

(45) Veröffentlichungstag der Patentschrift :
**12.08.92 Patentblatt 92/33**

(51) Int. Cl.⁵ : **B60T 8/24**

(21) Anmeldenummer : **89905669.1**

(22) Anmeldetag : **09.05.89**

(86) Internationale Anmeldenummer :
**PCT/EP89/00507**

(87) Internationale Veröffentlichungsnummer :
**WO 89/11409 30.11.89 Gazette 89/28**

(54) VERFAHREN ZUR ERHÖHUNG DER BEHERRSCHBARKEIT EINES GEBREMSTEN FAHRZEUGES.

(30) Priorität : **24.05.88 DE 3817546**

(43) Veröffentlichungstag der Anmeldung :
**27.03.91 Patentblatt 91/13**

(45) Bekanntmachung des Hinweises auf die
Patenterteilung :
**12.08.92 Patentblatt 92/33**

(84) Benannte Vertragsstaaten :
**AT DE FR GB IT SE**

(56) Entgegenhaltungen :
**DE-A- 3 545 901**
**FR-A- 2 594 963**
**GB-A- 2 188 996**
**US-A- 4 043 608**

(73) Patentinhaber : **ROBERT BOSCH GMBH**
**Postfach 30 02 20**
**W-7000 Stuttgart 30 (DE)**

(72) Erfinder : **VAN ZANTEN, Anton**
**Waldstrasse 15/2**
**W-7257 Ditzingen 4 (DE)**
Erfinder : **KOST, Friedrich**
**Heinrich-Ebner-Strasse 24**
**W-7000 Stuttgart 50 (DE)**
Erfinder : **RUF, Wolf-Dieter**
**Schlatthölzlesweg 17**
**W-7076 Waldstetten (DE)**
Erfinder : **WEISS, Karl-Josef**
**Hausgärten 33**
**W-7050 Waiblingen (DE)**
Erfinder : **HARTMANN, Uwe**
**Olgastrasse 79**
**W-7000 Stuttgart 1 (DE)**
Erfinder : **BUSCH, Gerd**
**Karlsbader Strasse 53**
**W-7016 Gerlingen (DE)**

(74) Vertreter : **Kammer, Arno, Dipl.-Ing.**
**ROBERT BOSCH GmbH Zentralstelle**
**Patente-Elektronik Postfach 30 02 20**
**W-7000 Stuttgart 1 (DE)**

EP 0 418 264 B1

## Beschreibung

### Stand der Technik

Die Erfindung betrifft ein Verfahren zur Erhöhung der Beherrschbarkeit eines gebremsten Fahrzeugs durch Änderung des Bremsdrucks an den Rädern.

Verfahren, die diese Verbesserung der Fahrzeugbeherrschbarkeit bewirken, sind z.B. Antiblockierregler und Antriebsschlupfregler (sh. z.B. DE-C2 3140959). In Zusammenhang mit ABS ist auch die Giermomentenabschwächung und die select-low-Regelung bekannt, die eine weitere Erhöhung der Beherrschbarkeit bewirken.

### Vorteile der Erfindung

Zum besseren Verständnis der folgenden Beschreibung werden vorab folgende Definitionen gegeben:

Die Querstabilitätsreserve QRS ist ein Maß für die augenblickliche steigung im Betriebspunkt der Schräglaufkurve. Man kann sie bei dem erfindungsgemässen Verfahren wie folgt beschreiben

$$QRS = -\frac{by,n - by,o}{by,p - by,o}$$

Hierin bedeuten:

by,o     den Anfangswert der Querbeschleunigung

by,p     die Querbeschleunigung des Rads während des Bremsschlupfpulses

by,n     die Querbeschleunigung des Rads nach dem Bremsschlupfpuls

Die Schräglaufkurve ist der bekannte Zusammenhang zwischen dem ReifenSchräglaufwinkel $\alpha$ und dem Seitenkraftschlußbeiwert $\mu_s$.

Das erfindungsgemäße Verfahren kann bei Fahrzeugen mit Antiblockierregelung und/oder Antriebsschlupfregelung zum Einsatz kommen. Bei diesen Regelungen treten bekanntlich relativ lange Phasen mit Konstanthaltung des Bremsdrucks auf.

Im Gegensatz zum eingangs erläuterten stand der Technik, bei dem keine Aussage darüber gemacht wird, wie stabil und lenkfähig ein Fahrzeug während einer Bremsung ist, wird bei dem erfindungsgemäßen Verfahren gemäß den Ansprüchen 1 und 2 eine solche Aussage gewonnen und damit der Schlupf im sinne einer Erhöhung der Beherrschbarkeit des Fahrzeugs variiert. Das Wesen der Erfindung besteht in der Bestimmung der Querstabilitätsreserve einer Fahrzeugsachse. Die Quer-Stabilitätsreserve ist - wie schon gesagt - ein Maß für die augenblickliche steigung, d.h. die lokale steigung im Betriebspunkt der Schräglaufkurve. Wenn die lokale steigung der Schräglaufkurve groß ist, dann ist die Quer-Stabilisierungsreserve groß und eine Vergrößerung des Schräglaufwinkels bringt eine große Zunahme des Seitenkraftschlußbeiwerts. Wenn die lokale steigung der Schräglaufkurve klein ist, dann ist die Quer-Stabilisierungsreserve klein und eine Vergrößerung des Schräglaufwinkels bringt nur eine kleine Zunahme des Seitenkraftschlussbeiwerts. Wenn die lokale steigung der Schräglaufkurve negativ ist, dann ist die QuerStabilitätsreserve negativ und eine Vergrößerung des Schräglaufwinkels bringt eine Abnahme des Seitenkraftschlußbeiwerts.

Mit der Quer-Stabilitätsreserve hat man somit ein Maß für die Seitenkraftreserven an den Achsen. Durch Änderung der Bremsschlüpfe kann ran die QuerStabilitätsreserven ändern und damit die Lenkbarkeit und die Stabilität des Fahrzeugs verbessern bzw. ein Schleudern und Schieben des Fahrzeugs verhindern.

Dieser Feststellung liegen folgende Überlegungen zugrunde. Es ist bekannt, daß die Bremskraft bzw. der Bremsschlupf eines Reifens einen sehr groben Einfluß auf die Querdynamik eines Fahrzeugs, d.h. auf die Lenkbarkeit und Stabilität des Fahrzeugs hat. Im allgemeinen kann man sagen, daß ein Längsschlupf an den Hinterrädern zu einer Minderung der Stabilität führt. Durch Beeinflussung des Bremsschlupfes an den Vorder- und Hinterrädern kann also die Lenkbarkeit und Stabilität des Fahrzeuges herauf- oder herabgesetzt werden. so wird z.B. durch Absenkung des Längsschlupfes an den Vorderrädern und Erhöhung des Längsschlupfes an den Hinterrädern die Gierwilligkeit (Lenkbarkeit) des Fahrzeugs erhöht. Urgekehrt kann durch Erhöhung des Längsschlupfes an den Vorderrädern und Absenkung des Längsschlupfes an den Hinterrädern die Gierwilligkeit des Fahrzeugs abgesenkt werden, was einer Stabilisierung des Fahrzeugs gleichkommt. In ähnlicher Weise kann durch Absenkung des Längsschlupfes an den Vorder- und Hinterrädern der Kurvenradius verkleinert werden.

Wenn auch im folgenden der Längsschlupf mit Bremsschlupf bezeichnet wird, gelten die Ausführungen auch für den Antriebsschlupf.

Die Frage ist nun, ob und wieviel der Bremsschlupf an den jeweiligen Rädern erhöht oder abgesenkt werden soll; z.B. die Frage, ob der Kurvenradius sowohl durch Absenkung des Bremsschlupfes an den Vorder- und Hinterrädern als auch durch Erhöhung des Lenkwinkels verkleinert werden kann. Da bei großen Bremsschlupfwerten die erforderlichen Lenkwinkel sehr groß sein können (verglichen mit ungebremsten Lenkmanövern) scheint es sinnvoll dem Fahrer mit einer gezielten Beeinflussung des Bremsschlupfes an den Rädern zu unterstützen. Weiter scheint es unabdingbar, den Bremsschlupf an den Hinterrädern derart zu begrenzen, daß das Maximum der Schräglaufkurven nicht überschritten wird.

Wird das Maximum der Schräglaufkurven an den Hinterrädern doch überschritten, so muß zur Stabilisierung des Fahrzeugs der Bremsschlupf an den Vorderrädern erhöht und an den Hinterrädern abgesenkt werden.

Die Kernfrage ist nun, um wieviel der Fahrer durch gezielte Beeinflussung der Bremsschlüpfe an den verschiedenen Rädern unterstützt werden sollte, wobei vorausgesetzt werden muß, daß durch gezielte Eingriffe in die Bremsschlüpfe fahrkritische Situationen auf jeden Fall vermieden werden müssen. Zur Lösung dieser Fragen ist es zwingend notwendig, Information über Reserven in den Seitenkraftschlußbeiwerten zu erhalten.

Figurenbeschreibung

Im folgenden wird nun hierauf unter Hinweis auf die Figuren der Zeichnung näher eingegangen. Es zeigen:
Fig. 1 - 9 Diagramm zur Erläuterung der Erfindung
Fig. 10 ein Blockschaltbild zur Erläuterung eines Ausführungsbeispiels der Erfindung.

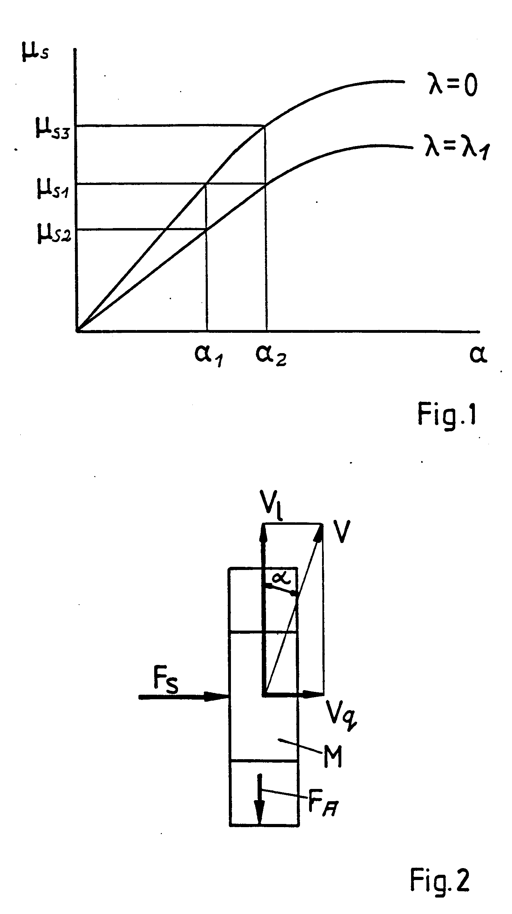

Der funktionelle Zusammenhang zwischen dem Reifenschräglaufwinkel $\alpha$ und dem Seitenkraftschlußbeiwert $\mu_s$ ist prinzipiell bekannt und in Fig.1 dargestellt. Der nichtlineare Verlauf der Schräglaufkurve bedeutet, daß die Kurve bis zum Maximum hin immer flacher verläuft. Dies bedeutet daß mit größer werdenden Schräglaufwinkel immer größere Schräglaufwinkelinkremente notwendig sind um den Seitenkraftschlußbeiwert um ein und denselben Betrag zu erhöhen. Wird der Reifen abgebremst und läuft er mit einem Bremsschlupf $\lambda_1$ so reduziert sich der Seitenkraftschlußbeiwert wie angegeben.

Zur weiteren Erklärung des Verfahrens wird angenommen daß das Rad mit dem Reifen sich mit konstanter Längsgeschwindigkeit bewegt, daß eine Seitenkraft Fs auf dem Rad ausgeübt wird, und daß die Radaufstandskraft $F_A$ und die Radmasse M ist (Fig.2).

Durch die Seitenkraft stellt sich am Reifen ein Seitenkraftschlußbeiwert $\mu_{s,1} = F_S/F_A$ ein. Dazu gehört der Schräglaufwinkel $\alpha_1$. Wird nun das Rad abgebremst, sodaß der Bremsschlupf $\lambda_1$ wird, dann fällt der Seitenkraftschlußbeiwert ab auf $\mu_{s,2}$ das Rad wird in Querrichtung beschleunigt mit der Beschleunigung $by_1$, bis sich der neue Schräglaufwinkel $\alpha_2$ eingestellt hat und der Seitenkraftschlußbeiwert $\mu_{s,1}$ wieder erreicht ist. Bei diesem Vorgang ändern sich der Schräglaufwinkel und der Seitenkraftschlußbeiwert entlang der $\lambda$ - Kurve.

Wenn nun im Anschluß an diese Bremsung das Bremsmoment wieder weggenommen wird, so erhöht sich der Seitenkraftschlußbeiwert auf $\mu_2$ und das Rad wird wieder in Querrichtung, nun aber in der anderen Richtung als vorher, beschleunigt mit Beschleunigung $by_2$, bis sich der alte Schräglaufwinkel $\alpha_1$ wieder eingestellt hat. Je flacher die Schräglaufkurve zwischen $\alpha_1$ und $\alpha_2$ verläuft, desto kleiner ist die Beschleunigung mit der das Rad sich vom Schräglaufwinkel $\alpha_2$ zum Schräglaufwinkel $\alpha_1$ bewegt.
Diese Beschleunigung ist also ein Maß für die lokale steigung der Schgläufkurve.

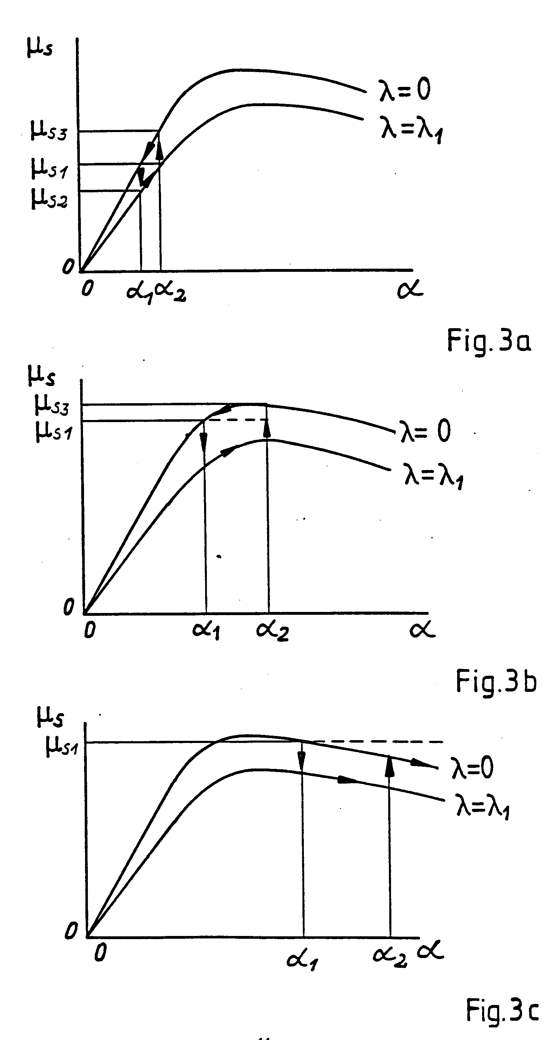

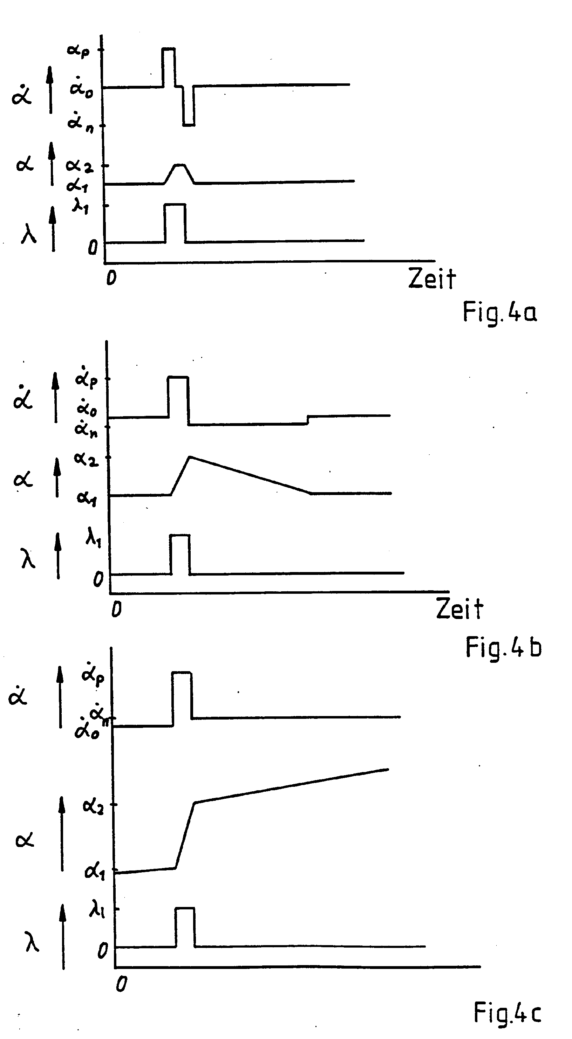

Der gerade beschriebene Sachverhalt ist in den Fig.3 und 4 für verschiedene Anfangs-Schräglaufwinkel dargestellt. wobei Fig.4 unten den Bremsschlupf $\lambda_1$, darüber den Schräglaufwinkel $\alpha$ und schließlich die die Änderung von $\alpha$ zeigt. In Fig. 3a und 4a liegt der Anfangswert des Schräglaufwinkels im stabilen Bereich, und die Steigung der Schräglaufkurve ist groß. Hier beschleunigt sich das Rad schnell zum Anfangswert $\alpha_1$ des Schräglaufwinkels hin, nachdem das Bremsmoment wieder zurückgenommen wurde. In Fig. 3b und 4b liegt der Anfangswert des Schräglaufwinkels kurz vor dem Maximum der Schräglaufkurve, also noch im stabilen Bereich. Wenn das Bremsmoment wieder zurückgenommen wird, beschleunigt sich das Rad nur langsam zum Anfangswert $\alpha_1$ des Schräglaufwinkels hin. In Fig. 3c und 4c liegt der Anfangswert des Schräglaufwinkels hinter dem Maximum der Schräglaufkurve also im instabilen Bereich der Schräglaufkurve. Nach der Zurücknahme des Bremsmoments wird das Rad nicht mehr zurück zum Anfangswert des Schräglaufwinkels beschleunigt. Stattdessen beschleunigt das Rad weiter in der selben Richtung und der Schräglaufwinkel wird immer größer.

Da die Beschleunigungen des Rades in Seitenrichtung davon abhängen, wie groß die Änderungen des Bremsschlupfes sind, wird die Beschleunigung in Seitenrichtung noch bezogen auf den Maximalwert, der während des Bremsschlupfpulses auftritt. Bei Kurvenfahrt hat die Querbeschleunigung schon einen Anfangswert $by,o$.

Diese Anfangs-Querbeschleunigung wird nun in der folgenden Definition der Quer-Stabilitätsreserve QSR berücksichtigt:

$$QSR = -\frac{by,n - by,o}{by,p - by,o}$$

wobei $by,p$ die Querbeschleunigung des Rades während des Bremsschlupfpulses, $by,n$ die Querbeschleunigung nach dem Bremsschlupfpuls ist.

Die Quer-Stabilitätsreserve hat also etwas mit der augenblicklichen steigung der Schräglaufkurve zu tun. Bei der Berechnung von QSR ist zu berücksichtigen, daß durch verschiedene Tot- und Verzögerungszeiten die Werte by,p und by,n bezüglich des Druckimpulses (der für die Erzeugung des Bremsschlupfpulses notwendig ist) zeitverschoben auftreten. Üblicherweise sind die Messignale gestört und eine geeignete Filterung dieser Signale ist dann notwendig.

Bei der bis jetzt besprochenen Ausführungsform sind vorzugsweise Querbeschleunigungssensoren an den Achsen für die Messung der Querbeschleunigungen vorgesehen. Als Alternative kann auch ein Gierbeschleunigungssensor benutzt werden. Die Benutzung der Meßwerte zur Bestimmung der Quer-Stabilitätsreserve wird im folgenden anhand von Beispielen erläutert.

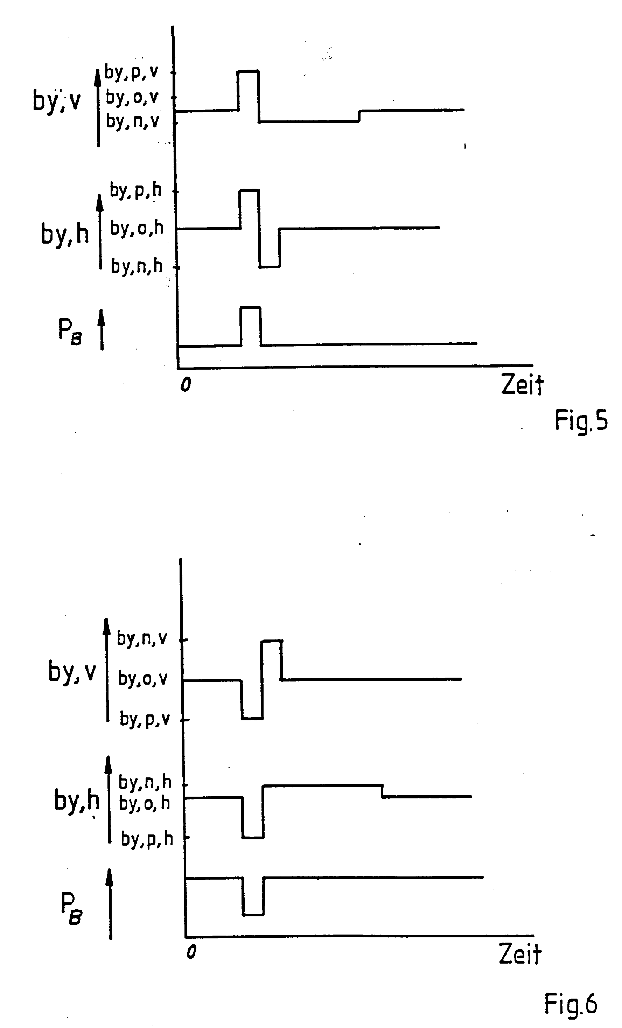

Bei einem 1-Kanal ABS werden bekanntlich alle Radbremsdrücke gemeinsam moduliert. Zur Bestimmung der Quer-Stabilitätsreserve wird gemäß Fig. 5 der Bremsdruck in den Rädern pulsartig erhöht ( Fig. 5 unten). Es werden die Querbeschleunigungen an der Vorder- und an der Hinterachse gemessen.

Aus Fig. 5 ergibt sich, daß die Quer-Stabilitätsreserve,

$$QSRv = -\frac{by,n - by,o,v}{by,p,v - by,o,v}$$

an der Vorderachse klein ist,

da der Zähler verglichen mit dem Nenner klein ist. Ebenso ist nach Fig. 5 die Quer-Stabilitätsreserve

$$QSRh = -\frac{by,n,h - by,o,h}{by,p,h - by,o,h}$$

an der Hinterachse groß,

da der Zähler ungefähr so groß wie der Nenner ist. Aufgrund der Werte QSRv und QSRh kann gefolgert werden, daß das Fahrzeug zwar stabil ist daß es aber wenig Lenkbarkeitsreserve hat. Um die Lenkbarkeitsreserve zu erhöhen, wird man also den Bremsschlupf insgesamt etwas erniedrigen.

In Fig. 6 wird im Gegensatz zu Fig.5 der Bremsdruck nicht erhöht, sondern gesenkt. Gemäß dieser Figur ist die Quer-Stabilisierungsreserve

$$QSRh = -\frac{by,n,v - by,o,v}{by,p,v - by,o,v}$$

an der Vorderachse groß,

da der Zähler ungefähr so groß wie der Nenner ist. Ebenso ist gemäß Fig. 6 die Quer-Stabilisierungsreserve

$$QSRh = -\frac{by,n,h - by,o,h}{by,p,h - by,o,h}$$

an der Hinterachse klein,

da der Zähler viel kleiner ist als der Nenner. Aufgrund der Werte QSRv und QSRh kann gefolgert werden, daß das Fahrzeug sich nahe an der Stabilitätsgrenze (Schleudergrenze) bewegt, die Lenkbarkeitsgrenze aber noch lange nicht erreicht worden ist. Man wird daher den Bremsschlupf ebenfalls reduzieren.

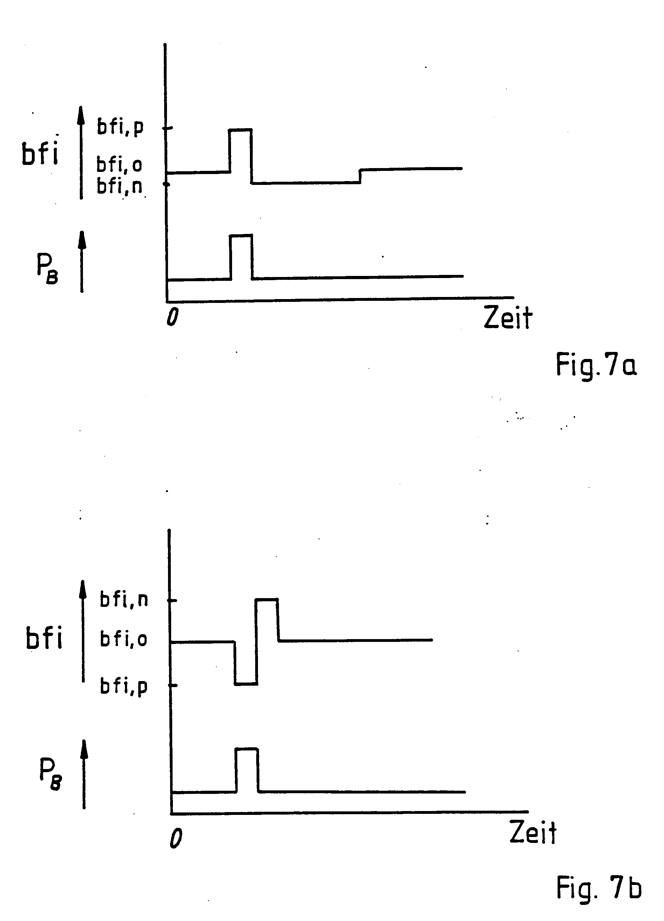

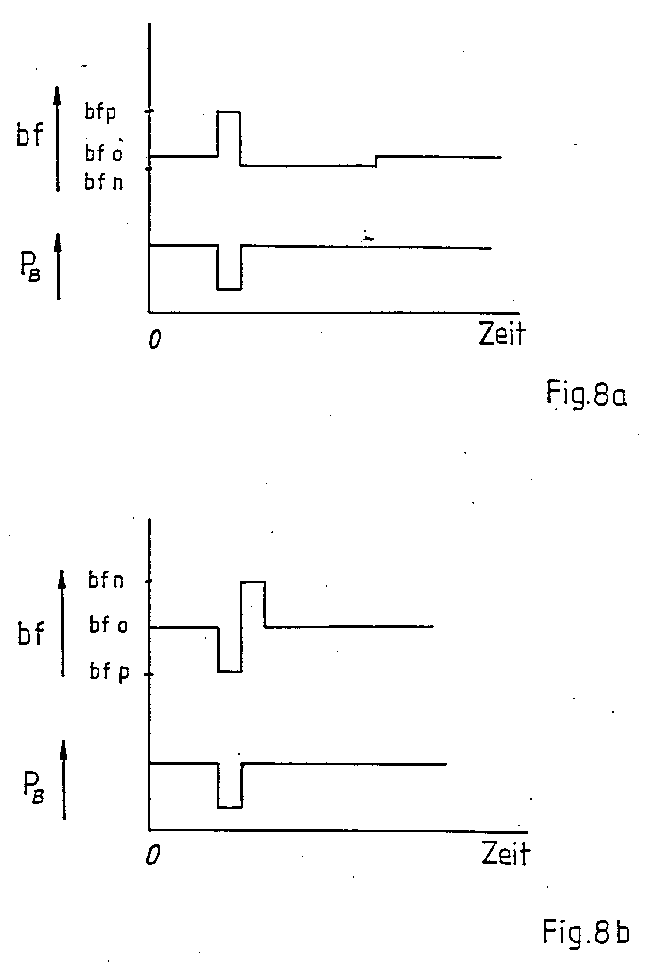

Als Alternative zur Querbeschleunigungsmessung kann auch ein Gierbeschleunigungssensor benutzt werden. Um aber zwischen Lenkbarkeit und Stabilität unterscheiden zu können, muß noch das Vorzeichen des Lenkwinkels als Signal herangezogen werden. Der Sachverhalt ist in Fig.7 und 8 dargestellt. In Fig.7 wird der Bremsdruck an allen Rädern kurzzeitig erhöht, während in Fig.8 der Bremsdruck an allen Rädern kurzzeitig gesenkt wird.

In Fig. 7a folgt bei einer Druckerhöhung (Bremsschlupferhöhung) eine positive Gierbeschleunigung. Die kleine Gierbeschleunigung nach dem Druckimpuls zeigt eine kleine QuerStabilitätsreserve an:

$$QSR = -\frac{bfi,n - bfi,o}{bfi,p - bfi,o}$$

wobei bfi,p die Gierbeschleunigung während dem Druckpuls, und bfi,n die Gierbeschleunigung vor dem Druckimpuls ist. Die Quer-Stabilitätsreserve ist klein da der Zähler klein ist verglichen mit dem Nenner. Wenn der Lenkwinkel dasselbe Vorzeichen hat wie die Gierbeschleunigung während des Druckimpuls dann bedeutet dies, daß sich das Fahrzeug nahe an der Stabilitätsgrenze bewegt.

In Bild 7b folgt auf einer Druckerhöhung (Bremsschlupferhöhung) eine negative Gierbeschleunigung, während nach der Druckerhöhung eine positive Gierbeschleunigung gemessen wird. Die große Beschleunigung nach dem Druckimpuls zeigt eine große Quer-Stabilitätsreserve

$$QSR = -\frac{bfi,n - bfi,o}{bfi,p - bfi,o}$$

an, da der Zähler ungefähr gleich groß ist wie der Nenner.

Wenn der Lenkwinkel dasselbe Vorzeichen hat, wie die Gierbeschleunigung während des Druckpulses, dann bedeutet dies, daß das Fahrzeug sehr stabil ist. Wenn der Lenkwinkel ein anderes Vorzeichen hat wie die Gierbeschleunigung während dem Druckpuls, dann bedeutet dies, daß das Fahrzeug sehr gut lenkbar ist. Anstatt einer Schlupferhöhung kann zur Bestimmung der QuerStabilitätsreserve auch eine Schlupfsenkung am gebremsten Bad benutzt werden.

In der Fig. 8a und 8b ist derselbe Sachverhalt wie in den Fig.7a und 7b dargestellt, nun aber mit einer Bremsschlupf- bzw. Bremsdrucksenkung.

In Fig.8a wird der Bremsschlupf kurzzeitig gesenkt. Während des Bremsdruckpulses wird eine positive Gierbeschleunigung gemessen. Die kleine Gierbeschleunigung nach dem Druckpuls zeigt eine kleine Quer-Stabilitätsreserve

$$QSR \ = \ -\frac{bfi,n - bfi,o}{bfi,p - bfi,o}$$

an, da der Zähler klein ist, verglichen mit dem Nenner. Wenn der Lenkwinkel dasselbe Vorzeichen hat wie die Gierbeschleunigung während des Druckpulses, dann bewegt sich das Fahrzeug nahe an der Lenkbarkeitsgrenze.

Wenn der Lenkwinkel ein anderes Vorzeichen hat wie die Gierbeschleunigung während dem Druckpuls, dann bewegt sich das Fahrzeug nahe an der Stabilitätsgrenze (schleudergrenze).

Auch in Fig.8b wird der Bremsschlupf kurz gesenkt. Während des Bremsdruckpulses, wird eine negative Gierbeschleunigung gemessen. Die große Gierbeschleunigung nach der Bremsdruckpuls zeigt eine große Quer-Stabilitätsreserve

$$QSR \ = \ -\frac{bfi,n - bfi,o}{bfi,p - bfi,o}$$

an, da der Zähler ungefähr gleich groß ist wie der Nenner

Wenn der Lenkwinkel ein anderes Vorzeichen hat wie die Gierbeschleunigung während des Druckpulses, dann ist das Fahrzeug sehr stabil.

Wenn der Lenkwinkel dasselbe Vorzeichen hat wie die Gierbeschleunigung während des Druckpulses, dann ist das Fahrzeug sehr gut lenkbar.

Bei einem 2-Kanal ABS sind die Räder entweder achsweise oder in der Diagonale hydraulisch zusammengefaßt. Andere Konfigurationen sind aber auch möglich. Bei der achsweise Regelung kann die Quer-Stabilitätsreserve für die Achsen getrennt bestimmt werden. Bei der diagonalweisen Regelung kann der Bremsdruck an einer Achse nicht unabhängig von der anderen Achse moduliert werden. Auch wenn es möglich wäre, den Druck in nur einem Rad an einer Achse zu modulieren, gilt die berechnete Quer-Stabilitätsreserve für beide Räder zusammen. Eine Quer-Stabilitätsreserve eines einzelnen Rades kann also nicht berechnet werden. Dies ist kein gravierender Nachteil, weil die Quer-Stabilitätsreserve der Räder auf einer Achse von vornherein ungefähr gleich groß ist (ungefähr gleicher Schräglauf, ungefähr gleiche Schräglaufkurve). Für die Berechnung der Quer-Stabilitätsreserve ist es deshalb auch möglich die Bremsdrücke in den beiden Diagonalen synchron zu modulieren wie dies bei 1-Kanal ABV der Fall ist. Bei Diagonalregelung gelten also dieselben Berechnun-gen für QSR wie bei 1-Kanal ABS unabhängig davon, ob nun jede Diagonale für sich oder beide Diagonale zusammen druckmoduliert werden.

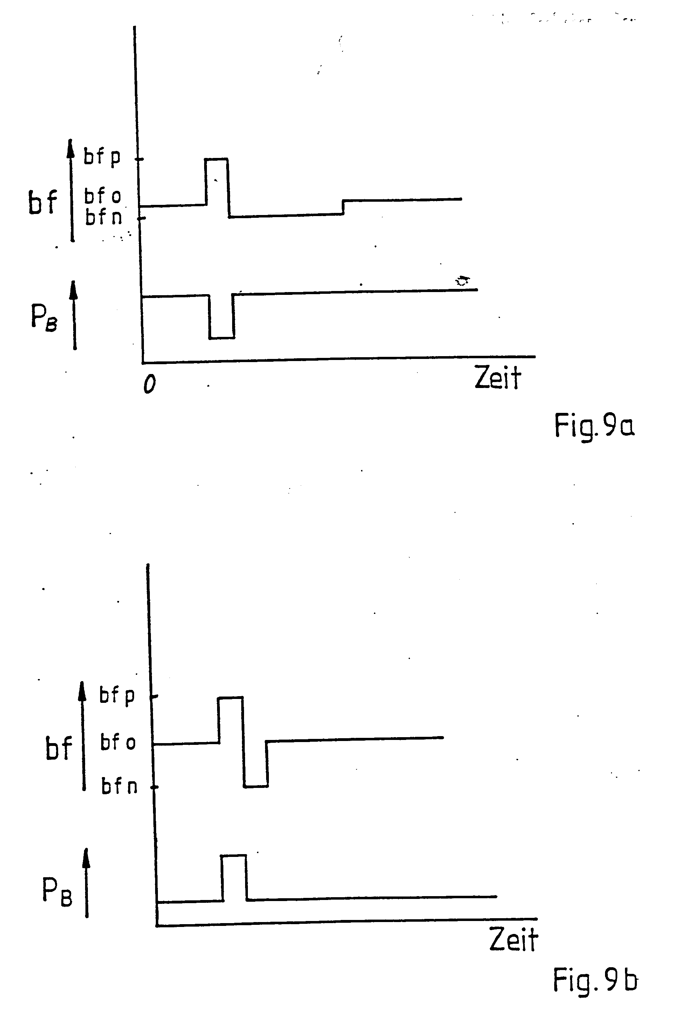

Bei einer achsweise hydraulische Zusammenfassung der Räder ist in Fig.9a der Druck an der Vorderachse und in Fig.9b der Druck an der Hinterachse moduliert. Gemessen wird in beiden Bildern die Fahrzeuggierbeschleunigung. Der Lenkwinkel braucht nicht gemessen zu werden, da für jede Achse die Quer-Stabilitätsreserve gesondert berechnet werden kann.

In Fig. 9a wird der Bremsschlupf kurzzeitig gesenkt. Die kleine Gierbeschleunigung nach dem Druckpuls zeigt eine kleine Quer-Stabilitätsreserve

$$QSRv \ = \ -\frac{bfi,n - bfi,o}{bfi,p - bfi,o}$$

an, da der Zähler klein ist verglichen mit dem Nenner. Das Fahrzeug ist also nahe der Grenze der Lenkbarkeit.

In Fig. 9b wird der Bremsschlupf kurzzeitig erhöht. Die große Gierbeschleunigung nach dem Druckpuls zeigt eine grobe Quer-Stabilitätsreserve

$$QSRh \ = \ -\frac{bfi,n - bfi-o}{bfi,p - bfi,o}$$

an, da der Zähler ungefähr gleich groß wie der Nenner ist.

Wenn statt der Messung der Gierbeschleunigung bei der Achsregelung die Querbeschleunigungen gemessen werden, dann gilt die bereits gegebene Definition der Quer-Stabilitätsreserve:

an der Vorderachse

$$QSRv \ = \ -\frac{by,n,v - by,o,v}{by,p,v - by,o,v}$$

an der Hinterachse

$$QSRh \ = \ -\frac{by,n,h - by,o,h}{by,p,h - by,o,h}$$

Bei 3-Kanal und 4-Kanal Reglern können einzelne Räder unabhängig voneinander druckmoduliert werden. Aus den Gründen, die bereits bei 2-Kanal ABV erwähnt wurden, ist dies hier aber nicht sinnvoll.

Da bei der achsweisen Druckmodulation eine Lenkwinkelmessung auch bei der Messung der Gierwinkelbeschleunigung entfallen kann, ist auch bei 3-Kanal und 4-Kanal ABS die Zusammenfassung der Räder einer Achse sinnvoll. Die Definition der Quer-Stabilitätsreserven an den Achsen ist dann die gleiche, wie unter 2-Kanal ABV mit Achsregelung angegeben.

Zusammenfassend kann gesagt werden.

Die Fähigkeit eines Reifens durch Erhöhung des Schräglaufwinkels Seitenführungskraft aufzunehmen, wird Quer-Stabilitätsreserve QSR genannt.

Wenn QSR in der Nähe von 1 liegt, dann kann durch Vergrößerung des Schräglaufwinkels noch viel an Seitenführungskraft gewonnen werden. Wenn QSR in der Nähe von 0 liegt, dann liegt der Schräglaufwinkel in der Nähe des Maximums der Schräglaufkurve und durch Änderung des Schräglaufwinkels kann die Seitenführungskraft kaum geändert werden. Wenn QSR negativ ist, dann ist das Maximum der Schräglaufkurve überschritten und der Schräglaufwinkel befindet sich im instabilen Bereich der Schräglaufkurve.

Diese Feststellungen gelten auch für die Räder einer Fahrzeugachse.

Wenn die Querbeschleunigung der Achsen gemessen werden, dann gilt folgende Definition der Quer-Stabilitätsreserve einer Achse

$$QSR = -\frac{b_{y,n} - b_{y,o}}{b_{y,p} - b_{y,o}}$$

wobei $b_{y,o}$ die Querbeschleunigung der Achse vor, $b_{y,p}$ die Querbeschleunigung der Achse während und $b_{y,n}$ die Querbeschleunigung der Achse nach dem Bremsschlupfpuls bz w. Bremsdruckpuls ist, und wobei der Bremsschlupfpuls bzw. Bremsdruckpuls sowohl positiv (Erhöhung) als auch negativ (Absenkung) sein kann.

Wenn die Gierbeschleunigung des Fahrzeuges gemessen wird, dann gilt folgende Definition der Quer-Stabilitätsreserve des Fahrzeugs:

$$QSR = -\frac{b_{fi,n} - b_{fi,o}}{b_{fi,p} - b_{fi,o}}$$

wobei $b_{fi,o}$ die Fahrzeug-Girebeschleunigung vor, $b_{fi,p}$ die Fahrzeug-Gierbeschleunigung während und $b_{fi,n}$ die Fahrzeug-Gierbeschleunigung nach dem Bremsschlupfpuls bzw. Bremsdruckpuls ist, und wobei der Bremsschlupfpuls bzw. Bremsdruckpuls sowohl positiv (Erhöhung) als auch negativ (Absenkung) sein kann.

Bei Fahrzeug-Gierbeschleunigungsmessung und Achsregelung ist die Zuordnung der Quer-Stabilitätsreserve zu den Achsen eindeutig, wenn der Druckimpuls an den Achsen nacheinander erzeugt wird. Wenn bei Fahrzeug-Gierbeschleunigungsmessung die Räder der Vorderachse und der Hinterachse nicht unabhängig voneinander druckmoduliert werden können, wie dies bei 1-Kanal ABV und 2-Kanal-ABV mit Diagonalregelung der fall ist, dann muß noch das Lenkwinkel vorzeichen bestimmt werden für die Zuordnung der Quer-Stabilitätsreserve zur Lenkbarkeit oder zur Stabilität des Fahrzeugs. Es muß allso herausgefunden werden, ob das Fahrzeug an der Grenze seiner Lenkbarkeit oder an der Grenze seiner Stabilität gelangt ist. Es es gelten die folgenden logischen Verknüpfungen.

QSR bedeutet Fahrzeug- Lenkbarkeitsreserve ist vorhanden, wenn:
(Bremsschlupfpuls > 0) und (bfi,p > 0) und (Lenkwinkel < 0)
(Bremsschlupfpuls > 0) und (bfi,p < 0) und (Lenkwinkel > 0)
(Bremsschlupfpuls < 0) und (bfi,p > 0) und (Lenkwinkel > 0)
(Bremsschlupfpuls < 0) und (bfi.p < 0) und (Lenkwinkel < 0)

QSR bedeutet Fahrzeug-Stabilitätsreserve ist vorhanden, wenn:
(Bremsschlupfpuls > 0) und (bfi,p > 0) und (Lenkwinkel > 0)
(Bremsschlupfpuls > 0) und (bfi,p < 0) und (Lenkwinkel < 0)
(Bremsschlupfpuls < 0) und (bfi,p > 0) und (Lenkwinkel < 0)
(Bremsschlupfpuls < 0) und (bfi,p < 0) und (Lenkwinkel > 0)

Wenn der Schräglaufwinkel bzw. die Seitenführungskraft 0 ist, dann kann durch Bremsschlupfänderung die Seitenführungskraft nicht geändert werden. Deshalb ist es notwendig, daß der Betrag der Quer- oder Gierbeschleunigung während des Bremsschlupfpulses eine vorgegebene schwelle, welche noch abhängig von dem Fahrbahn-Reibbeiwert ist, überschreitet. Weiter müssen die Beschleunigungen groß genug sein und lange genug anstehen, damit sie zuverlässig gemessen werden können und nicht im Messrauschen und streuungen untergehen.

Durch Tot- und Verzögerungszeiten in der gesamten Mess-, Filter- und Regelkette können die verschiedenen Signale zeitverschoben auftreten. Dies muß bei der Berechnung von QSR berücksichtigt werden.

Aufgrund der Quer-Stabilitätsreserven an den Achsen kann zur Verbesserung des dynamischen Fahrzeugverhaltens der Bremsschlupf an den Achsen bzw. an den einzelnen Rädern erhöht oder abgesenkt werden.

Es gelten folgende Zusammenhänge:

Während einer ABS-Bremsung werden ständig Druckpulse abgegeben. Aus der Reaktion des Fahrzeugs auf diesen Druckpulsen werden, unter Berücksichtigung des Lenkwinkels, die Querstabilitätsreserve (QSR) an der Vorderachse und an der Hinterachse abgeleitet.

Wenn die QSR an der Vorderachse negativ ist, oder kleiner als eine festgelegte schwelle ist, dann ist das Fahrzeug nicht mehr bzw. kaum noch lenkbar. Der Druck in einem oder in beiden Radbremszylindern an der Vorderachse wird dann stufenweise so lange abgesenkt, bis die QSR an der Vorderachse positiv bzw. größer als die festgelegte schwelle ist.

In ähnlicher Weise gilt, daß wenn die QSR an der Hinterachse negativ ist, oder kleiner als eine festgelegte schwelle ist, dann ist das Fahrzeug nicht mehr stabil (Schleudervoigang) bzw. kaum noch stabil. Der Druck in einem oder in beiden Radbremszylindern an der Hinterachse wird dann stufenweise solange abgesenkt, bis die QSR an der Hinterachse positiv, bzw. größer als die festgelegte schwelle ist.

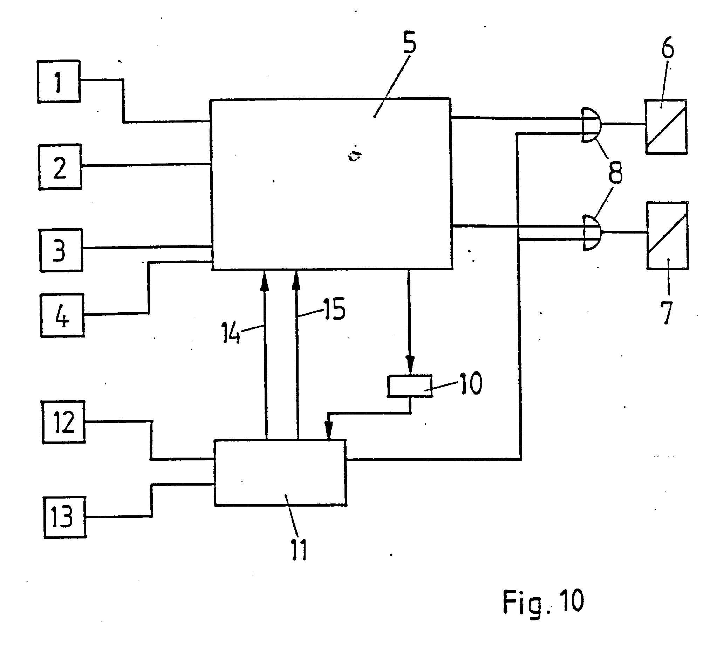

Anhand der Fig. 10 wird ein Ausführungsbeispiel der Erfindung erläutert. Dort ist ein Antiblockierregelsystem mit achsweisen Bremsdruckmodulation gezeigt. Es besteht aus den vier Rädern zugeordneten Meßwertgebern 1 - 4, einer Auswerteschaltung 5 und zwei Dreistellungsventilen 6 und 7, die jeweils den Bremsen einer Achse zugeordnet sind und in bekannter Weise über select-low und/oder select-high (evtl. umschaltbar) betätigt werden.

Druckkonstanthaltephasen während einer (ABS oder ASR) Bremsregelung werden einem Taktgeber 10 mitgeteilt, der in solchen Phasen von Zeit zu Zeit eine Schaltung 11 wirksam macht, die einerseits die Ventile 6 und 7 entweder im sinne einer Druckerhöhung oder Druckerniedrigung impulsförmig über ein Oder-Gatter 8 ansteuert (entsprechend z. B. Fig. 5 oder Fig. 6) und anderseits die von den Radachsen zugeordneten Querbeschleunigungsmessern 12 und 13 ermittelten Querbeschleunigungswerte vor, während und nach dem Druckimpuls abfrägt und teilweise speichert. Es werden dann die oben erwähnten Querstabilisierungswerte QSRv und QSRh ermittelt und aus diesen Werten gemäß den oben angegebenen Zusammenhängen Signale erzeugt, die über die Leitungen 14 und 15 zu der Auswerteschaltung 5 gegebenen werden und die bestimmen, ob der Druck und damit der schlupf an den einzelnen Achsen vermindert oder erhöht werden soll.

Wird ein Gierbeschleunigungsmesser als Sensor (z. B. sensor 12) benutzt, so wird der Druckimpuls achsweise nacheinander eingesteuert und jeweils die Gierbeschleunigung vor, nach und während des Druckimpulses gemessen.

Bei gleichzeitiger Bremsdruckregelung an beiden Achsen (z. B. diagonale Bremskreisaufteilung) wird zusätzlich zum Gierbeschleunigungssensor (12) noch ein Lenkwinkelgeber (Sensor 13) (Vorzeichen) benötigt.

## Patentansprüche

1. Verfahren zur Erhöhung der Beherrschbarkeit eines gebremsten Fahrzeugs mit Bremsdruckregelung durch Anderung des Bremsdrucks an den Rädern, dadurch gekennzeichnet, daß in zeitlichen Abständen in Phasen konstanten Bremsdrucks die Bremsdrücke an wenigstens einem Rad jeder Achse kurzzeitig geändert werden (Druckimpuls), daß nach Verschwinden der Druckimpulse die Querbeschleunigungsänderung gegenüber dem Zustand vor dem Druckimpuls an jeder der Achse bestimmt wird, und daß diese ein Maß für die Querstabilitätsreserve der einzelnen Achsen darstellenden Werte der Querbeschleunigungsänderungen zur Beeinflussung des Schlupfes der Räder durch Bremsdruckänderung verwendet werden, wobei bei festgestellter ausreichender Stabilitätsreserve eine Erhöhung der Lenkbarkeit durch die Schlupfänderungen und bei festgestellter ausreichender Lenkbarkeit eine Erhöhung der Stabilität durch die Schlupfänderungen bewirkt wird.

2. Verfahren zur Erhöhung der Lenkbarkeit und/oder der Stabilität eines gebremsten Fahrzeugs mit Bremsdruckregelung durch Änderung des Bremsdrucks an den Rädern dadurch gekennzeichnet, daß in zeitlichen Abständen in Phasenkonstanten Bremsdrucks die Bremsdrücke an wenigstens einem Rad jeder Achse kurzzeitig geändert werden (Druckimpuls), daß nach Verschwinden der Druckimpulse die Gierbeschleunigungsänderung des Fahrzeugs gegenüber dem Zustand vor dem Druckimpuls an jeder der Achsen bestimmt wird, und daß diese ein Maß für die Querstabilitätsreserve der einzelnen Achsen darstellenden Werte der Gierbeschleunigungsänderungen zur Beeinflussung des Schlupfs der Räder durch Bremsdruckänderung verwendet werden, wobei bei festgestellter ausreichender Stabilitätsreserve eine Erhöhung der Lenkbarkeit durch die Schlupfänderungen und bei festgestellter ausreichender Lenkbarkeit eine Erhöhung der Stabilität durch die Schlupfänderungen bewirkt wird.

3. Verfahren nach Anspruch 2, dadurch gekennzeichnet, daß bei gemeinsamer Beeinflussung des Drucks an beiden Achsen zusätzlich das Vorzeichen des Lenkwinkels bei der Bestimmung, ob eine Stabilitätsreserve oder eine Lenkbarkeitsreserve vorliegt, mitverwendet wird.

4. Verfahren nach einem der Ansprüche 1 bis 3, dadurch gekennzeichnet, daß die Querstabilitätsreserve QSR durch Bildung des Verhältnisses der ermittelten Beschleunigungsänderung zur Beschleunigungsänderung während des Auftreten des Druckimpulses gegenüber dem Zustand vor dem Druckimpuls ermittelt werden.

## Claims

1. Method for increasing the controllability of a braked vehicle with brake pressure control by changing the brake pressure at the wheels, <u>characterised in that</u> the brake pressures at at least one wheel of each axle are changed for a short period (pressure pulse) at time intervals during phases of constant brake pressure, that the transverse acceleration change relative to the condition before the pressure pulse is determined at each of the axle [sic] after the disappearance of the pressure pulses and that these values of the transverse acceleration changes, which represent a measure of the transverse stability reserve of the individual axles, are used to influence the slip of the wheels by brake pressure change, an increase in the steerability being effected by slip changes when an adequate stability reserve is found and an increase in the stability being effected by slip changes when an adequate steerability is found.

2. Method for increasing the steerability and/or the stability of a braked vehicle with brake pressure control by changing the brake pressure at the wheels, characterised in that the brake pressures at at least one wheel of each axle are changed for a short period (pressure pulse) at time intervals during phases of constant brake pressure, that the change in the yaw acceleration of the vehicle relative to the condition before the pressure pulse is determined at each of the axles after the disappearance of the pressure pulses and that these values of the changes in yaw acceleration, which represent a measure of the transverse stability reserve of the individual axles, are used to influence the slip of the wheels by brake pressure change, an increase in the steerability being effected by slip changes when an adequate stability reserve is found and an increase in the stability being effected by slip changes when an adequate steerability is found.

3. Method according to Claim 2, characterised in that where the pressure is jointly influenced at both axles, the sign of the steering angle is additionally used in the determination of whether a stability reserve or a steerability reserve is present.

4. Method according to one of Claims 1 to 3, characterised in that the transverse stability reserve QSR are [sic] determined by forming the ratio of the acceleration change determined to the acceleration change during the occurrence of the pressure pulse relative to the condition before the pressure pulse.

## Revendications

1. Procédé pour améliorer la maîtrise d'un véhicule freiné avec régulation de la pression de freinage par modification de la pression de freinage sur les roues, procédé <u>caractérisé en ce que</u> les pressions de freinage au moins sur une roue de chaque essieu sont brièvement modifiées (impulsion de pression) à des intervalles de temps dans des phases de pression de freinage constante, de telle sorte qu'après la disparition des impulsions de pression, on détermine la variation d'accélération transversale par rapport à l'état avant l'impulsion de pression sur chacun des essieux et en ce que ces valeurs, représentant une mesure de la réserve de stabilité transversale des différents essieux, des variations d'accélération transversale sont utilisées pour agir sur le glissement des roues par modification de la pression de freinage, tandis que, dans le cas d'une réserve de stabilité déterminée suffisante, une augmentation du braquage est provoquée par les variations de glissement et dans le cas d'un braquage déterminé suffisant, une augmentation de la stabilité est provoquée par les variations de glissement.

2. Procédé pour améliorer le braquage et/ou la stabilité d'un véhicule freiné avec régulation de la pression de freinage par variation de la pression de freinage sur les roues, procédé caractérisé en ce que les pressions de freinage au moins sur une roue de chaque essieu sont brièvement modifiées (impulsion de pression) à des intervalles de temps dans des phases de pression de freinage constante, de telle sorte qu'après la disparition des impulsions de pression on détermine la variation d'accélération transversale par rapport à l'état avant l'impulsion de pression sur chacun des essieux et en ce que ces valeurs, représentant une mesure de la réserve de stabilité transversale des différents essieux, des variations d'accélération transversale sont utilisées pour agir sur le glissement des roues par modification de la pression de freinage tandis que lors d'une réserve de stabilité déterminée, suffisante, une augmentation du braquage est provoquée par les variations de glissement et lors d'un braquage déterminé suffisant, une augmentation de la stabilité est provoquée par les variations de glissement.

3. Procédé selon la revendication 2, caractérisé en ce que lors de l'action commune de la pression sur les deux essieux, on utilise en outre le signe de l'angle de braquage pour déterminer s'il y a une réserve de stabilité ou une réserve de braquage.

4. Procédé selon une des revendications 1 à 3, caractérisé en ce que la réserve à stabilité transversale QSR est détectée en formant le rapport de la variation d'accélération détectée à la variation d'accélération pendant la production de l'impulsion de pression par rapport à l'état avant l'impulsion de pression.

Fig.1

Fig.2

Fig.3a

Fig.3b

Fig.3c

Fig. 4a

Fig. 4 b

Fig. 4 c

Fig. 5

Fig. 6

Fig. 7a

Fig. 7b

Fig.8a

Fig.8 b

Fig. 9a

Fig. 9b

Fig. 10